# EUROPÄISCHE PATENTANMELDUNG

(11) **EP 2 868 898 A1**
(43) Veröffentlichungstag der Anmeldung: **06.05.2015**
(21) Anmeldenummer: 13190849.3
(22) Anmeldetag: 30.10.2013
(51) Int. Cl.: F02C 9/18, F23R 3/26

(54) **Verbesserter Teillastbetrieb einer Gasturbine mit einstellbarem Bypass-Strömungskanal**

(71) Anmelder: Siemens Aktiengesellschaft, 80333 München (DE)
(72) Erfinder: Engler, Thorsten, 47447 Moers (DE); Gutermuth, Manuel, 45147 Essen (DE); Kerstiens, Thomas, 48149 Münster (DE); Kleinenhammann, Matthias, 45128 Essen (DE); Knüwer, Norbert, 45701 Herten (DE); Süselbeck, Kai, 46145 Oberhausen (DE); Tertilt, Marc, 45529 Hattingen (DE); Wagner, Ulrich, 51766 Engelskirchen (DE); Weidner, Frank, 45481 Mülheim an der Ruhr (DE)

(57) **Zusammenfassung**

Die Erfindung betrifft eine Gasturbine (100) sowie geeignete Betriebsverfahren, wobei die Gasturbine 1 (100) einen Verdichter (1) zur Bereitstellung von Verdichterluft (2), eine mit einem Brenner (3) versehene Brennkammer (4) und eine Entspannungsturbine (5) aufweist, wobei weiterhin ein Bypass-Strömungskanal (10) vorgesehen ist, der dazu ausgebildet ist, bei Betrieb der Gasturbine (100) Verdichterluft (2) an dem Brenner (3) vorbei und einem in der Brennkammer (4) erzeugten Heißgasstrom (6) zuzuführen, und wobei weiterhin der Öffnungsquerschnitt (Q) des Bypass-Strömungskanals (10) durch ein Stellmittel (11) eingestellt werden kann, und wobei weiterhin eine Einstelleinheit (20) umfasst ist, welche dazu ausgebildet ist, den Öffnungsquerschnitt (Q) des Bypass-Strömungskanals (10) derart einzustellen, dass die Änderungsgeschwindigkeit (V) des Öffnungsquerschnitts (Q) derart gewählt ist, dass die Primärzonentemperatur (TPZ) im Wesentlichen konstant ist, und insbesondere nicht mehr als um 10% variiert, oder dass die Änderungsgeschwindigkeit des Öffnungsquerschnitts (Q) derart gewählt ist, dass der relative Brennkammerdruckverlust (ΔBDV) oder eine Materialtemperatur (MT) der Brennkammer (4) im Wesentlichen konstant ist, insbesondere dass der relative Brennkammerdruckverlust (ΔBDV) oder die Materialtemperatur (MT) der Brennkammer (4) nicht mehr als um 10% variiert.

## Beschreibung

Die vorliegende Erfindung betrifft ein Verfahren zum Betreiben einer Gasturbine in Teillast, die einen Verdichter zur Bereitstellung von Verdichterluft aufweist, eine mit einem Brenner versehene Brennkammer und eine Entspannungsturbine, wobei weiterhin ein Bypass-Strömungskanal vorgesehen ist, der dazu ausgebildet ist, bei Betrieb der Gasturbine Verdichterluft an dem Brenner vorbei und einem in der Brennkammer erzeugten Heißgasstrom zuzuführen. Ebenfalls betrifft die vorliegende Erfindung eine derartige Gasturbine.

Gasturbinen sind typischerweise in ihrem Leistungsbereich zu den niedrigeren Teillastbereichen hin nur beschränkt betreibbar aufgrund von Grenzwertanforderungen an die CO-Emissionsmengen. Bei Verringerung des Teillastbetriebs zu kleineren Leistungen hin nimmt nämlich typischerweise die Primärzonentemperatur der Verbrennung zunehmend ab. Unterschreitet diese Primärzonentemperatur für eine Gasturbine typische Temperaturgrenzwerte, steigt die Menge an CO-Emissionen mitunter exponentiell an, da die Verbrennung von CO zu CO₂ nicht mehr in ausreichendem Maße erfolgen kann. Bei Erreichen vorbestimmter Grenzwerte muss deshalb der Teillastbetrieb zu kleineren Leistungen hin eingeschränkt werden, um nicht gegen die CO-Emissionsgrenzwerte zu verstoßen. Eine solche Einschränkung wirkt sich ebenfalls auf den Betrieb einer mit einer solchen Gasturbine gekoppelten Dampfturbinenanlage (im Sinne einer Gas-und-Dampfkraftwerksanlage, GuD) aus, da eine vom Betreiber möglicherweise gewünschte Leistungsverminderung unterhalb eines Grenzwertes nicht zu erreichen sein wird.

Aufgrund der Einhaltung vorbestimmter CO-Emissionsgrenzwerte ist also ein Kraftwerksbetreiber gezwungen, die Gasturbine bzw. eine mit dieser Gasturbine gekoppelte Dampfkraftwerksanlage zeitweise abzuschalten oder bei einem Teillastbereich zu verharren, der oberhalb der technisch möglichen Minimalleistung liegt.

Folglich stellt es sich als technisches Erfordernis dar, eine Gasturbine vorzuschlagen, bzw. ein Verfahren zum Betreiben einer solchen Gasturbine, welche erlauben, den Teillastbereich weiterhin nach unten abzusenken, ohne gleichzeitig CO-Emissionsgrenzwerte zu überschreiten. In anderen Worten soll also der Teillastbereich der Gasturbine unter Einhaltung von CO-Emissionsgrenzwerten insbesondere nach unten hin erweitert werden. Vor allem soll dieser Teillastbereich unterhalb des ansonsten technisch zugänglichen Lastbereiches vorgesehen sein, welcher durch geeignete Leitschaufelverstellung erreicht werden kann (sog. Leitschaufelverstellbereich).

Die der Erfindung zugrundeliegenden Aufgaben werden gelöst durch ein Verfahren zum Betreiben einer solchen vorab wie auch nachfolgend beschriebenen Gasturbine gemäß Anspruch 1 sowie gemäß Anspruch 2, sowie durch eine nachfolgend beschriebene Gasturbine gemäß Anspruch 8.

Insbesondere werden die der Erfindung zugrundeliegenden Aufgaben gelöst durch ein Verfahren zum Betreiben einer Gasturbine in Teillast, welche einen Verdichter zur Bereitstellung von Verdichterluft, eine mit einem Brenner versehene Brennkammer und eine Entspannungsturbine aufweist, wobei weiterhin ein Bypass-Strömungskanal vorgesehen ist, der dazu ausgebildet ist, bei Betrieb der Gasturbine Verdichterluft an dem Brenner vorbei und einem in der Brennkammer erzeugten Heißgasstrom zuzuführen, und wobei weiterhin der Öffnungsquerschnitt des Bypass-Strömungskanals durch ein Stellmittel eingestellt werden kann, welches Verfahren folgende Schritte aufweist:
- Betreiben der Gasturbine in Teillast;
- Einstellung des Öffnungsquerschnitts des Bypass-Strömungskanals, so dass die Änderungsgeschwindigkeit des Öffnungsquerschnitts derart gewählt ist, dass die Primärzonentemperatur im Wesentlichen konstant ist, und insbesondere nicht mehr als um 10% variiert.

Weiterhin werden die der Erfindung zugrundeliegenden Aufgaben gelöst durch ein Verfahren zum Betreiben einer Gasturbine in Teillast, welche einen Verdichter zur Bereitstellung von Verdichterluft, eine mit einem Brenner versehene Brennkammer und eine Entspannungsturbine aufweist, wobei weiterhin ein Bypass-Strömungskanal vorgesehen ist, der dazu ausgebildet ist, bei Betrieb der Gasturbine Verdichterluft an dem Brenner vorbei und einem in der Brennkammer erzeugten Heißgasstrom zuzuführen, und wobei weiterhin der Öffnungsquerschnitt des Bypass-Strömungskanals durch ein Stellmittel eingestellt werden kann, welches Verfahren folgende Schritte aufweist:
- Betreiben der Gasturbine in Teillast;
- Einstellung des Öffnungsquerschnitts des Bypass-Strömungskanals, so dass die Änderungsgeschwindigkeit des Öffnungsquerschnitts derart gewählt ist, dass der relative Brennkammerdruckverlust oder eine Materialtemperatur der Brennkammer im Wesentlichen konstant ist, insbesondere, dass der relative Brennkammerdruckverlust oder die Materialtemperatur der Brennkammer nicht mehr als um 10% variiert.

Weiterhin werden die der Erfindung zugrundeliegenden Aufgaben gelöst durch eine Gasturbine geeignet zum Ausführen eines Verfahrens wie vorab und auch nachfolgend dargestellt, welche einen Verdichter zur Bereitstellung von Verdichterluft, eine mit einem Brenner versehene Brennkammer und eine Entspannungsturbine aufweist, wobei weiterhin ein Bypass-Strömungskanal vorgesehen ist, der dazu ausgebildet ist, bei Betrieb der Gasturbine Verdichterluft an dem Brenner vorbei und einem in der Brennkammer erzeugten Heißgasstrom zuzuführen, und wobei weiterhin der Öffnungsquerschnitt des Bypass-Strömungskanals durch ein Stellmittel eingestellt werden kann, wobei weiterhin eine Einstelleinheit umfasst ist, welche dazu ausgebildet ist, den Öffnungsquerschnitt des Bypass-Strömungskanals derart einzustellen, dass die Änderungsgeschwindigkeit des Öffnungsquerschnitts derart gewählt ist, dass die Primärzonentemperatur im Wesentlichen konstant ist, und insbesondere nicht mehr als um 10% variiert, oder dass die Änderungsgeschwindigkeit des Öffnungsquerschnitts derart gewählt ist, dass der relative Brennkammerdruckverlust oder die Materialtemperatur der Brennkammer im Wesentlichen konstant ist, insbesondere dass der relative Brennkammerdruckverlust nicht mehr als um 10% variiert.

Die Einstelleinheit ist hierbei bevorzugt als Regeleinheit ausgebildet, kann jedoch auch als Steuereinheit ausgebildet sein. Die Einstelleinheit ermöglicht hierbei die automatische Einstellung der Änderungsgeschwindigkeit des Öffnungsquerschnitts, bzw. des Öffnungsquerschnitts.

An dieser Stelle sei darauf hingewiesen, dass die Primärzonentemperatur (TPZ) eine aus der Energiebilanz um Brenner und Flamme ermittelte Mitteltemperatur ist, die den thermodynamischen Zustand des Heißgases nach abgeschlossener chemischer Reaktion beschreibt. Die TPZ korreliert daher sehr gut mit dem CO-Anteil der Verbrennungsgase.

Weiterhin ist darauf hinzuweisen, dass der relative Brennkammerdruckverlust als Quotient aus Brennkammerdifferenzdruck und Verdichterenddruck ermittelt werden kann. Hierbei ergibt sich der Brennkammerdifferenzdruck durch eine Differenz zweier statischer Drücke, die an unterschiedlichen Messstellen an oder in der Brennkammer ermittelt werden. Typischerweise wird eine Druckermittlung vor dem Brenner bzw. im Bereich des Brenners ermittelt, und ein Druckwert innerhalb der Brennkammer, etwa am Ende der Verbrennungszone. Die Druckdifferenz aus beiden ermittelten Druckwerten wird durch Quotientenbildung auf den Verdichterenddruck bezogen, der, wie der Name bereits sagt, den statischen Druck am Ende des Verdichters beschreibt und ebenfalls messtechnisch erfassbar ist.

Ebenso soll darauf hingewiesen werden, dass die erfindungsgemäße Materialtemperatur der Brennkammer sich auf eine direkt und indirekt messtechnisch erfasste Materialtemperatur bezieht. Eine solche ist insbesondere eine Temperatur der Brennkammerwandung, eine Temperatur der Brennkammerkacheln, oder etwa eine Temperatur eines Flammrohrbauteils, welches von der Brennkammer mit umfasst ist.

Das Vorsehen eines vorab beschriebenen Bypass-Strömungskanals in einer Gasturbine ist bereits aus dem Stand der Technik bekannt. So beschreibt bspw. die DE 43 39 724 C1 eine Gasarmatur, welche eine gemeinsame Wand zwischen einem Verdichterauslass und einem Turbineneinlass aufweist. Diese Wand weist einen Schieber auf, der korrespondierende Schlitze in dieser Wand abdeckt. Die Schlitze sind hierbei im Sinne eines Bypass-Strömungskanals zu verstehen. Die Schlitze können hinsichtlich ihres Öffnungsquerschnittes durch Betätigung des Schiebers variabel eingestellt werden. Entsprechend der Lehre der DE 43 39 724 C1 ist vorgesehen, die Schlitze entsprechend der Gasturbinenleistung einzustellen, um somit den Massenstrom in der Turbine in einer geeigneten Größenordnung zu halten. Bei einem Lastabwurf können die Schlitze, um ein selbstständiges Beschleunigen der Gasturbine zu vermeiden, etwa durch eine geeignete Betätigung annähernd schlagartig in eine Endstellung verfahren werden, um so eine Überbrückung (By-Pass) des Brenners durch die Verdichterluft zu vermeiden. Die in der DE 43 39 724 C1 beschriebene Fahrweise ist jedoch ausschließlich zur Leistungsregulierung vorgesehen und erlaubt damit keinen Betrieb, welcher konform zu CO-Emissionsgrenzwerten erfolgt.

An dieser Stelle sei darauf hingewiesen, dass die Offenbarung der DE 43 39 724 C1 durch ausdrückliche Bezugnahme in die vorliegende Anmeldung mit aufgenommen werden soll.

Die vorliegende Erfindung nutzt nun eine Einstellung des Öffnungsquerschnitts des Bypass-Strömungskanals, um bei einem Teillastbetrieb eine zu CO-Emissionsgrenzwerten konforme Fahrweise zu gewährleisten. Hierbei wird der Öffnungsquerschnitt des Bypass-Strömungskanals zeitlich verändert, so dass die Änderungsgeschwindigkeit des Öffnungsquerschnitts derart gewählt ist, dass die Primärzonentemperatur im Wesentlichen konstant ist. Bevorzugt bleibt die Primärzonentemperatur unterhalb des durch den Leitschaufelverstellbereich bestimmten Leistungsbereichs der Gasturbine im Wesentlichen konstant. Die Primärzonentemperatur liegt so etwa bei Erreichen des minimalen Leitschaufelverstellbereichs typischerweise immer noch oberhalb einer Temperatur, ab welcher mit einer deutlichen Erhöhung der CO-Emissionen zu rechnen ist. Geeignete Abschätzungen dieser Temperatur sind aus dem Stand der Technik bekannt, bzw. sind für eine konkrete Ausführungsform der Gasturbine numerisch leicht ermittelbar.

Aufgrund solcher thermischer Abschätzungen bzw. geeigneter Rechenverfahren kann der Öffnungsquerschnitt des Bypass-Strömungskanals auch bei Teillastleitungen berechnet werden, die insbesondere unterhalb des durch den Leitschaufelverstellbereich bestimmten Leistungsbereichs der Gasturbine liegen, wobei etwa als Randbedingung eine im Wesentlichen konstante Primärzonentemperatur gewährleistet werden kann. Solche Abschätzungen bzw. Rechenverfahren können mitunter auch auf Versuchsmessungen basieren. Wird nun ein Teillastbetrieb zu kleineren Werten hin vermindert, erfolgt erfindungsgemäß eine kontinuierliche Einstellung des Öffnungsquerschnitts des Bypass-Strömungskanals zu größeren Werten hin, so dass ein zunehmender Druckausgleich zwischen dem stromabwärts angeordneten Bereich des Bypass-Strömungskanals (Brennkammer) und dem stromaufwärts angeordneten Bereich des Bypass-Strömungskanals (Verdichterluftplenum) resultiert.

Infolgedessen wird auch die Druckdifferenz vermindert, welche die Strömungsgeschwindigkeit der Verdichterluft durch den Brenner bestimmt. Gleichzeitig kann auch - variierend je nach Ausführungsform der Gasturbine - die Kühlleistung zur Brennkammerkühlung verändert werden, welche etwa aufgrund der Einströmung von Verdichterluft in Kühlkanäle der Brennkammer zur Kühlung von Heißgasteilen in der Brennkammer resultiert. An dieser Stelle ist insbesondere die Gasturbine des Typs SGT X-2000E der Anmelderin zu nennen, bei welcher derartige Kühlkanäle als Kühlluftbohrungen zur Kühlung der Flammrohrböden durch Prallkühlung vorgesehen sind (siehe etwa auch DE 43 39 724 C1).

Aufgrund der Verminderung des Drucks des der Brennkammer zugeführten Verdichterluftstroms kommt es ebenfalls zu einer Verringerung der Kühlleistung der Heißgasteile in der Brennkammer. Werden nun die thermischen Belastungen für die Heißgasteile der Brennkammer aufgrund der verminderten Kühlung zu groß, kann mit Materialschäden sowie dem Ausfall einzelner Bauteile zu rechnen sein. Um einer solchen Entwicklung vorzugreifen, wird nun erfindungsgemäß vorgeschlagen, eine Anpassung der Änderungsgeschwindigkeit des Öffnungsquerschnitts des Bypass-Strömungskanals vorzunehmen, und zwar derart, dass der relative Brennkammerdruckverlust oder eine Materialtemperatur der Brennkammer als Einstellgröße herangezogen wird. Durch einen im Wesentlichen konstanten relativen Brennkammerdruckverlust wird die Strömungsgeschwindigkeit der Verdichterluft zur Kühlung der Heißgasteile in der Brennkammer ebenfalls im Wesentlichen konstant gehalten. Damit resultiert eine im Wesentlichen konstante Kühlrate, so dass eine Erhöhung der Temperaturen, mit welchen die Heißgasteile in der Brennkammer beaufschlagt werden, vermieden werden kann.

Ausführungsgemäß wird vorgeschlagen, eine Gasturbine durch ein Verfahren gemäß Anspruch 1, insbesondere bei Verminderung der Teillast, zunächst so lange zu betreiben, bis die thermischen Belastungen für die Heißgasteile der Brennkammer zu groß werden. Anschließend kann vorgesehen sein, die Gasturbine durch ein Verfahren gemäß Anspruch 2 zu betreiben, so dass die resultierende Kühlleistung in der Brennkammer bzw. an den Heißgasteilen in der Brennkammer im Wesentlichen konstant ist. Ausführungsgemäß wird die Primärzonentemperatur zunächst als geeignete Einstellgröße herangezogen, wobei nach Erreichen eines nicht weiter zu überschreitenden Temperaturgrenzwerts der relative Brennkammerdruckverlust oder die Materialtemperatur der Brennkammer als weitere Einstellgröße herangezogen wird. Durch die kombinierte Fahrweise bzw. durch die jeweiligen Einzelfahrweisen nach Anspruch 1 und 2 ist gewährleistet, dass die CO-Emissionswerte im Wesentlichen konstant gehalten werden können, bzw. unterhalb vorbestimmter CO-Grenzwerte liegen.

Die Änderungsgeschwindigkeit des Öffnungsquerschnitts des Bypass-Strömungskanals wird also im Verlauf des Teillastbetriebs derart angepasst, dass auch eine Verringerung der Teillast unterhalb von anlagenspezifischen Grenzwerten (etwa bestimmt durch den Leitschaufelverstellbereich) ermöglicht werden kann.

Erfindungsgemäß ist es möglich, die Änderung des Öffnungsquerschnitts des Bypass-Strömungskanals als eine kontinuierliche und/oder eine schrittweise Änderung über die Zeit hinweg auszuführen, wobei die jeweiligen Änderungen derart ausgeführt werden, dass die zugrundeliegenden Einstellgrößen (Primärzonentemperatur bzw. relativer Brennkammerdruckverlust) im Wesentlichen konstant bleiben, insbesondere aber nicht um mehr als 10% variieren. Die jeweils auszuführenden Änderungen können im Falle einer diskreten Änderung im Sinne von Stützstellen in einer Einstelleinheit hinterlegt sein, die dann bei Bedarf eine geeignete Änderung des Öffnungsquerschnitts veranlasst werden. Die Änderungsgeschwindigkeit des Öffnungsquerschnitts ist hierbei als zeitliches Mittel über die einzelnen diskreten Stützstellen zu verstehen.

Gemäß einer ersten und besonders bevorzugten Ausführungsform des erfindungsgemäßen Verfahrens ist vorgesehen, dass während eines ersten Zeitabschnitts das Verfahren nach Anspruch 1 ausgeführt wird, und während eines zweiten Zeitabschnitts das Verfahren nach Anspruch 2, wobei insbesondere der zweite Zeitabschnitt unmittelbar an den ersten Zeitabschnitt anschließt. Wie bereits oben im Detail erklärt, kann so eine besonders effiziente Fahrweise der Gasturbine in Teillast erreicht werden, die auch bei sehr geringen Teillastbereichen einen CO-konformen Betrieb ermöglicht. Ausführungsgemäß ist besonders bevorzugt, dass hierbei die Teillast über die Zeitabschnitte hinweg vermindert, insbesondere über beide Zeitabschnitte hinweg vermindert wird.

Gemäß einer weiteren Ausführungsform des erfindungsgemäßen Verfahrens ist vorgesehen, dass das Verfahren nach Anspruch 1 während eines ersten Zeitabschnitts solange ausgeführt wird, bis eine erste thermische Kenngröße einen vorbestimmten ersten Grenzwert erreicht, wobei dann insbesondere der zweite Zeitabschnitt anschließt, während dessen ein Verfahren nach Anspruch 2 ausgeführt wird. Die erste thermische Kenngröße ist hierbei insbesondere ein Maß für die Kühlleistung an Heißgasteilen der Brennkammer. Insofern kann bei Überschreiten eines thermischen Grenzwertes (erster Grenzwert) ein sicherer Betrieb der Gasturbine auch bei noch geringeren Teillastleistungen als während des ersten Zeitabschnitts erreicht werden, ohne CO-Emissionsgrenzwerte zu überschreiten.

Gemäß eines weiteren besonders bevorzugten Verfahrens ist vorgesehen, dass das Verfahren nach Anspruch 2 so lange bei einer Teillastverminderung ausgeführt wird, bis eine zweite thermische Kenngröße einen vorbestimmten zweiten Grenzwert erreicht, wobei dann insbesondere die Änderung des Öffnungsquerschnitts derart gewählt wird, dass der Öffnungsquerschnitt verringert wird, insbesondere schrittweise verringert wird. Eine solche verfahrenstechnische Vorkehrung kann mitunter erforderlich sein, da der relative Brennkammerdruckverlust von den Umgebungsbedingungen abhängig ist, und somit nicht stets eine ausreichende Kühlleistung der Heißgasteile der Brennkammer gewährleistet werden kann, wenn etwa die Umgebungstemperaturen sehr hoch sind. Wird nun trotz kontinuierlicher bzw. schrittweiser Vergrößerung des Öffnungsquerschnitts des Bypass-Strömungskanals keine ausreichende Kühlleistung zur Verfügung gestellt, kann ein zweiter Grenzwert einer zweiten thermischen Kenngröße überschritten werden. Die thermische Kenngröße ist insbesondere eine geeignete Einstellgröße, die die Temperaturbelastung in der Brennkammer erfasst, und damit den thermisch sicheren Betrieb der Gasturbine gewährleistet. Eine geeignete Kenngröße für diese Temperaturbelastung kann bspw. etwa eine gemessene Materialtemperatur (bevorzugt in der Brennkammer) sein, die über ein Thermoelement direkt oder indirekt erfasst wurde, bzw. eine Ersatzkenngröße, wie bspw. der relative Brennkammerdruckverlust oder andere geeignete thermische Größe.

Wird nun der zweite Grenzwert durch die zweite thermische Kenngröße erreicht, wird der Öffnungsquerschnitt des Bypass-Strömungskanals verringert. Bevorzugt erfolgt diese Verringerung in Schrittweiten von etwa 10 % des gesamten Verfahrwegs. Infolgedessen steigt der Kühlluftmassenstrom erneut an und die Heißgasteile der Brennkammer werden verstärkt mit Kühlleistung versorgt. Ausführungsgemäß kann dieser Vorgang insbesondere bei schrittweiser Änderung so lange wiederholt werden, bis die zweite thermische Kenngröße einen Wert oberhalb eines weiteren dritten thermischen Grenzwertes erreicht.

Entsprechend einer Weiterführung des ausführungsgemäßen Verfahrens ist vorgesehen, dass bei Verringerung des Öffnungsquerschnittes und bei Erreichen eines dritten thermischen vorbestimmten Grenzwertes durch die zweite thermische Kenngröße die Änderung des Öffnungsquerschnitts derart gewählt wird, dass der Öffnungsquerschnitt wieder vergrößert wird, insbesondere wieder schrittweise vergrößert wird. Eine schrittweise Vergrößerung kann hierbei bevorzugt in Schritten von etwa 10 % des gesamten Verfahrwegs erfolgen. Durch die so ausgeführte Hysterese einer Verkleinerung zunächst und dann wieder darauf erfolgenden Vergrößerung des Öffnungsquerschnittes des Bypass-Strömungskanals kann eine stabile Regelung des Gasturbinenbetriebs erreicht werden.

Gemäß einer besonders bevorzugten Ausführungsform des erfindungsgemäßen Verfahrens ist vorgesehen, dass das Verfahren unterhalb des Leitschaufelverstellbereiches ausgeführt wird. Infolgedessen kann wie oben erklärt, der Teillastleistungsbereich weiter verringert werden, ohne jedoch eine Überschreitung von CO-Grenzwerten befürchten zu müssen. Damit kann die Flexibilisierung des Gasturbinenbetriebs signifikant verbessert werden.

Gemäß einer ersten besonders bevorzugten Ausführungsform der erfindungsgemäßen Gasturbine ist vorgesehen, dass weiterhin eine Regelschaltung und eine Messsonde umfasst sind, wobei die Messsonde zur Erfassung einer thermischen Kenngröße ausgebildet ist und die Regelschaltung dazu ausgebildet ist, bei einer Teillastverminderung bei Erreichen eines vorbestimmten Grenzwertes (zweiter Grenzwert) der thermischen Kenngröße (zweite thermische Kenngröße), die Änderung des Öffnungsquerschnittes derart gewählt wird, dass der Öffnungsquerschnitt wieder verringert wird, insbesondere schrittweise verringert wird.

Wie weiter oben bereits ausgeführt, kann so eine stabile Regelung der Gasturbine erreicht werden, wobei gleichzeitig der Abhängigkeit des relativen Brennkammerdruckverlustes von den Umgebungsbedingungen Rechnung getragen werden kann. Ebenfalls kann gleichzeitig der Schutz von Heißgasteilen der Brennkammer durch ausreichende Kühlung gewährleistet werden.

Gemäß einer weiteren besonders bevorzugten Ausführungsform der erfindungsgemäßen Gasturbine ist vorgesehen, dass die Gasturbine derart ausgebildet ist, dass die dem Brenner zugeleitete Verdichterluft wenigstens zum Teil zum Kühlen von Heißgasteilen der Brennkammer, insbesondere von Flammrohrböden, mittels Leitung durch Kühlkanäle in der Brennkammer vorgesehen ist. Durch das Vorsehen von Kühlkanälen in der Brennkammer kann insbesondere bei Ausführung des Verfahrens nach Anspruch 2 eine ausreichende Kühlleistung gewährleistet werden. Damit kann einer Überhitzung und einer daraus folgenden Schädigung von Heißgasteilen der Brennkammer vorgebeugt werden.

Nachfolgend soll die Erfindung anhand einzelner Figuren im Detail näher beschrieben werden. Hierbei sei darauf hingewiesen, dass technische Merkmale, die gleiche Bezugszeichen aufweisen, gleiche technische Wirkungen aufweisen.

Ebenfalls soll darauf hingewiesen sein, dass die nachfolgenden Figuren lediglich schematisch zu verstehen sind, und damit keine Einschränkung hinsichtlich der Ausführbarkeit der Erfindung begründet werden kann.

Ebenfalls ist zu bemerken, dass die nachfolgend erklärten technischen Merkmale in beliebiger Kombination miteinander beansprucht werden, soweit die Kombination, die die der Erfindung zugrundeliegende Aufgabe lösen kann.

Hierbei zeigen:
- Figur 1: eine schematische Darstellung der Änderung der Primärzonentemperatur (TPZ) in Abhängigkeit von der relativen Gasturbinenleistung (ΔGTP) bei vollständig geschlossenem und offenem Öffnungsquerschnitt des Bypass-Strömungskanals;
- Figur 2: eine diagrammatische Darstellung des relativen Öffnungsquerschnitts (RQ) in Abhängigkeit von der korrigierten Turbinenaustrittstemperatur (OTC) unterhalb des Leitschaufelverstellbereichs (LSVB) entsprechend geeigneter Ausführungsformen der erfindungsgemäßen Fahrweisen in Teillast;
- Figur 3: einen funktionalen Verlauf der zweiten thermischen Kenngröße (TK2) in Abhängigkeit von der Zeit (t) bei einem Betrieb zur Verminderung der Teillastleistung bei Erreichen eines zweiten Grenzwertes (GW2) sowie eines dritten Grenzwertes (GW3);
- Figur 4: eine erste Ausführungsform des erfindungsgemäßen Verfahrens nach Anspruch 1;
- Figur 5: eine weitere Ausführungsform des erfindungsgemäßen Verfahrens nach Anspruch 2;
- Figur 6: eine Ausführungsform einer erfindungsgemäßen Gasturbine in perspektivischer seitlicher Schnittansicht;
- Figur 7: eine vereinfachte schematische Teilschnittansicht der in Figur 6 gezeigten Gasturbine.

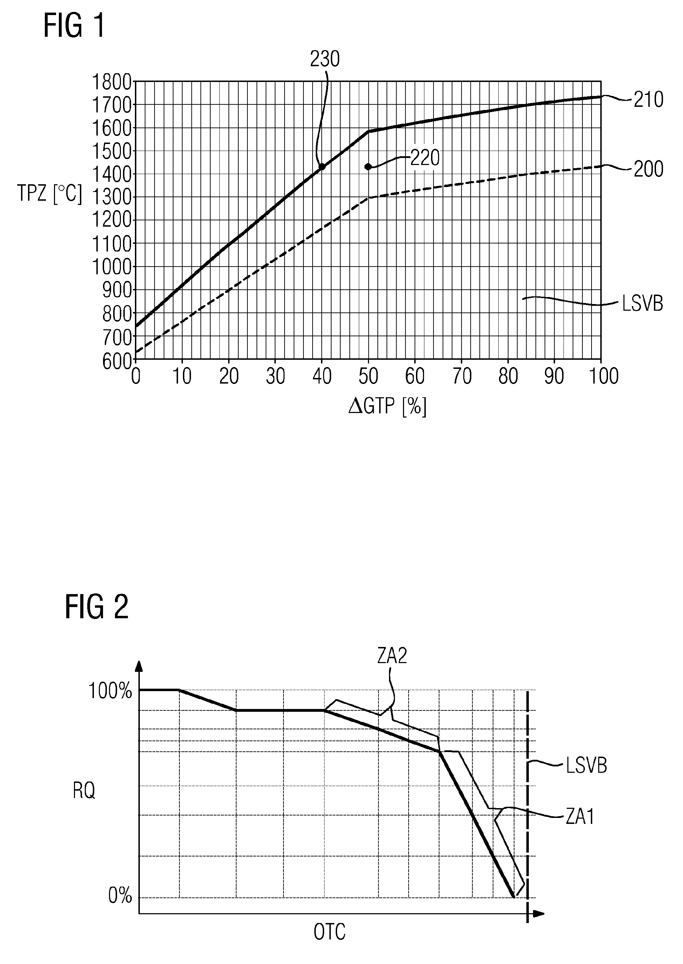

Figur 1 zeigt eine diagrammatische Darstellung des Verlaufs der Primärzonentemperatur TPZ (in °C) in Abhängigkeit von der relativen Gasturbinenleistung ΔGTP (in %). Hierbei sind zwei grundlegend verschiedene Fahrweisen der Gasturbine dargestellt, nämlich eine bei vollständig geschlossenem Bypass-Strömungskanal (Fahrweise 200), sowie eine bei vollständig geöffnetem Bypass-Strömungskanal (Fahrweise 210). Deutlich erkennbar ist bei beiden Fahrweisen 200 und 210 ein flacherer Verlauf im Bereich des Leitschaufelverstellbereichs LSVB, über welchen die Gasturbine bei herkömmlichem Teillastbetrieb durch geeignete Einstellung der Leitschaufeln in dem Leitschaufelverstellbereich LSVB bei unterschiedlichen Teillastleistungen betrieben werden kann. Eine Unterstützung des Teillastbetriebs unterhalb dieses Leitschaufelverstellbereichs LSVB ist jedoch durch Verstellung der Leitschaufeln nicht mehr möglich. Die der Erfindung zugänglichen Bereiche betreffen bevorzugt diese darunter liegenden Bereiche. Sie liegen in Folge dessen zwischen dem Bereich 200 bei geschlossenem Bypass-Strömungskanal und dem Bereich 210, welcher eine Fahrweise mit geöffnetem Bypass-Strömungskanal darstellt.

Beispielhaft sind in Figur 1 zwei Punkte 220, 230 dargestellt, die zur Veranschaulichung weiterer Betriebspunkte dienen. Der Betriebspunkt 220 stellt einen Betriebszustand bei minimalem Leitschaufelverstellbereich dar, der bei teilweise geöffnetem Bypass-Strömungskanal die Primärzonentemperatur TPZ erreicht, wie sie etwa bei Grundlast vorliegt. Hierzu im Gegenteil stellt der Betriebspunkt 230 einen Betriebszustand dar, der ebenfalls die Primärzonentemperatur TPZ bei Grundlast erreicht, diese jedoch bei vollständig geöffnetem Bypass-Strömungskanal. Der Betriebspunkt 230 ist jedoch hinsichtlich der relativen Gasturbinenleistung deutlich unterhalb des technisch möglichen minimalen Leitschaufelverstellbereichs LSVB vorgesehen.

Figur 2 stellt den funktionellen Verlauf des relativen Öffnungsquerschnitts RQ in Abhängigkeit von der korrigierten Turbinenaustrittstemperatur OTC dar. Der relative Öffnungsquerschnitt RQ betrifft das Verhältnis von vorliegendem, also eingestelltem Öffnungsquerschnitt Q zum maximal möglichen Öffnungsquerschnitt. Hierbei weist die dargestellte Fahrweise unterhalb des Leitschaufelverstellbereichs LSVB eine Fahrkurve auf, die mehrere Stützstellen aufweist. Bei abnehmender korrigierter Turbinenaustrittstemperatur OTC, d.h. bei abnehmender Teillastleistung, wird zunächst während eines ersten Zeitabschnitts ZA1 eine Fahrweise gewählt, die einer Ausführungsform nach Anspruch 1 entspricht. Hierbei wird die Einstellung des Öffnungsquerschnitts Q des Bypass-Strömungskanals 10 so vorgenommen, dass die Änderungsgeschwindigkeit V des Öffnungsquerschnitts Q derart gewählt ist, dass die Primärzonentemperatur TPZ im Wesentlichen konstant ist, und insbesondere um nicht mehr als um 10% variiert. Während dieses ersten Zeitabschnitts ZA1 kann somit eine im Wesentlichen konstante Primärzonentemperatur TPZ gewährleistet werden, wodurch die CO-Emissionswerte oberhalb von bestimmten, nicht zu überschreitenden Grenzwerten gehalten werden kann.

Während eines zweiten Zeitabschnitts ZA2, welcher direkt an den ersten Zeitabschnitt ZA1 anschließt, wird die Fahrweise insofern geändert, als dass diese nun entsprechend einer Ausführungsform nach Anspruch 2 erfolgt. Hierbei wird bei der Gasturbine die Einstellung des Öffnungsquerschnitts Q des Bypass-Strömungskanals 10 so vorgenommen, dass die Änderungsgeschwindigkeit V des Öffnungsquerschnitts Q derart gewählt ist, dass der relative Brennkammerdruckverlust ΔBDV oder die Materialtemperatur MT der Brennkammer 4 im Wesentlichen konstant ist, insbesondere derart, dass der relative Brennkammerdruckverlust ΔBDV oder die Materialtemperatur MT der Brennkammer 4 nicht mehr als um 10% variiert. Gemäß dieser Fahrweise kann gewährleistet werden, dass auch bei Einhaltung der CO-Emissionsgrenzwerte weiterhin eine ausreichende Kühlleistung für Heißgasteile in der Brennkammer zur Verfügung steht und so eine thermische Beschädigung dieser Bauteile verhindert werden kann.

Die weiteren in der Darstellung gezeigten Stützstellen bzw. Betriebszustände, betreffen jeweils aus dem Stand der Technik bekannte bzw. nicht weiter zu erklärende Stützpunkte bzw. Betriebszustände.

Die in Figur 2 aufgeführte korrigierte Turbinenaustrittstemperatur OTC entspricht der in Bezug auf die Lufttemperatur korrigierten Turbinenaustrittstemperatur, wie sie bspw. in der EP 1 462 633 A1 im Detail erklärt wird.

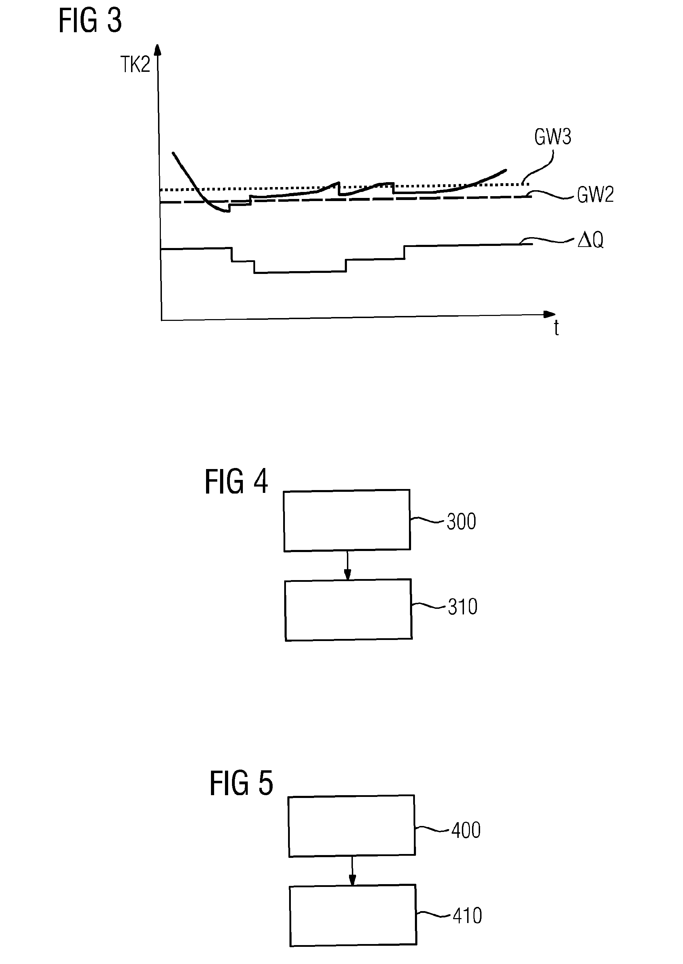

Figur 3 zeigt eine bei Teillastverminderung erfolgende Änderung der zweiten thermischen Kenngröße TK2 in Abhängigkeit von der Zeit. Hierbei zeigt sich zunächst bei kleinen Zeiten, dass die Teillastverminderung auch eine Verminderung der zweiten thermischen Kenngröße TK2 zur Folge hat. Bei Überschreiten eines vorbestimmten zweiten Grenzwertes GW2 wird jedoch die Änderung des Querschnitts Q des Bypass-Strömungskanals 10 derart gewählt, dass der Öffnungsquerschnitt Q nun verringert wird, insbesondere schrittweise verringert wird. Die schrittweise Verringerung ist hierbei durch das Änderungsverhalten ΔQ des Öffnungsquerschnitts Q angegeben. So erfolgt zunächst eine Verringerung des Öffnungsquerschnitts Q um zwei Schritte, wodurch der Verlauf der thermischen Kenngröße TK2 wieder über den zweiten Grenzwert GW2 angehoben wird. Der Verlauf der zweiten thermischen Kenngröße TW2 erreicht nach zwei schrittweisen Verringerungen des Querschnitts Q einen dritten vorbestimmten Grenzwert GW3, welcher nun Veranlassung dafür gibt, den Öffnungsquerschnitt Q wieder zu vergrößern, insbesondere wieder schrittweise zu vergrößern. Vorliegend erfolgt die Vergrößerung des Öffnungsquerschnitts Q wiederum in zwei Schritten, von vergleichbarer Größe zu den vorhergehenden beiden Schritten, so dass der resultierende Öffnungsquerschnitt Q dem Öffnungsquerschnitt Q entspricht, wie er vor Einleiten der schrittweisen Änderungen vorgelegen hat. Damit ist eine Stabilisierung der verstärkt abfallenden thermischen Kenngröße und damit eine Stabilisierung des Betriebs der Gasturbine 100 in Teillast erfolgt. Die Änderungen des Öffnungsquerschnittes Q gemäß des Änderungsverhaltens ΔQ werden hierbei von einer Einstelleinheit 20 vorgenommen, welche die entsprechenden Anpassungen veranlasst.

Figur 4 zeigt eine erste Ausführungsform des erfindungsgemäßen Verfahrens gemäß Anspruch 1, welches folgende Schritte umfasst:
- Betreiben der Gasturbine 100 in Teillast (erster Verfahrensschritt 300);
- Einstellung des Öffnungsquerschnitts Q des Bypass-Strömungskanals 10, so dass die Änderungsgeschwindigkeit V des Öffnungsquerschnitts Q derart gewählt ist, dass die Primärzonentemperatur TPZ im Wesentlichen konstant ist, und insbesondere nicht mehr als um 10% variiert (zweiter Verfahrensschritt 310).

Figur 5 zeigt eine weitere Ausführungsform des erfindungsgemäßen Verfahrens nach Anspruch 2, welches folgende Schritte aufweist:
- Betreiben der Gasturbine 100 in Teillast (erster Verfahrensschritt 400);
- Einstellung des Öffnungsquerschnitts Q des Bypass-Strömungskanals 10, so dass die Änderungsgeschwindigkeit V des Öffnungsquerschnitts Q derart gewählt ist, dass der relative Brennkammerdruckverlust ΔBDV oder die Materialtemperatur MT der Brennkammer 4 im Wesentlichen konstant ist, insbesondere dass der relative Brennkammerdruckverlust ΔBDV oder die Materialtemperatur MT der Brennkammer 4 nicht mehr als um 10% variiert (zweiter Verfahrensschritt 410).

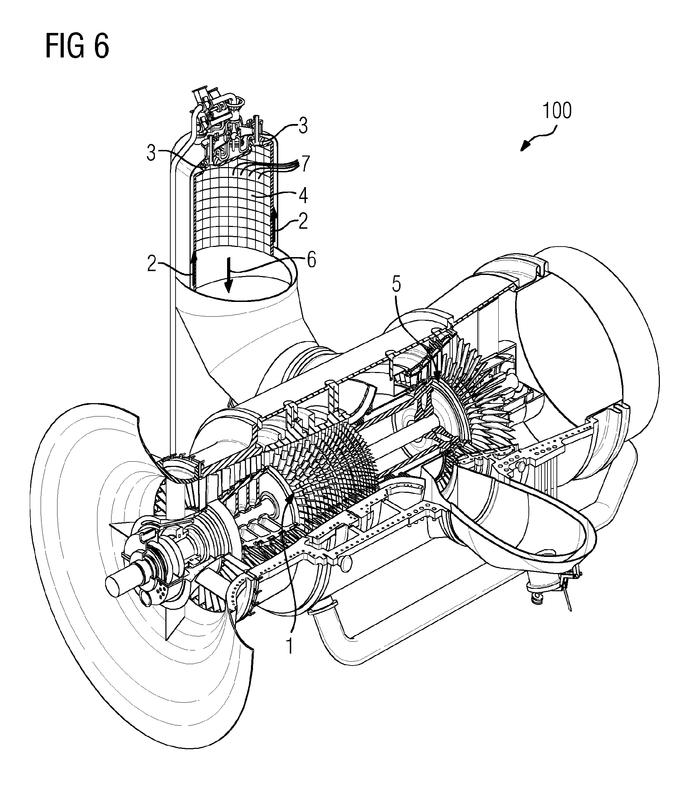

Figur 6 zeigt eine perspektivische Teilschnittansicht durch eine erfindungsgemäße Gasturbine 100, die im Wesentlichen dem von der Anmelderin vertriebenen Modell SGT5-2000E entspricht. Die Gasturbine 100 weist hierbei neben einem Verdichter 1 und einer Entspannungsturbine 5 eine mit mehreren Brennern 3 versehene Brennkammer 4 auf. Bei Betrieb der Gasturbine 100 wird Verdichterluft 2 aus dem Verdichter 1 seitlich an der Außenseite der Brennkammer 4 zu den Brennern 3 befördert. Aufgrund des statischen Druckunterschieds zwischen der Brennkammer 4 und dem Druck der an der Außenseite der Brennkammer 4 geleiteten Verdichterluft 2 strömt aus dieser Verdichterluft 2 entnommene Kühlluft durch Kühlkanäle 7 in die Brennkammer 4. Die restliche Verdichterluft 2 wird den Brennern 3 zugeführt und mit geeignetem Brennstoff verbrannt. Die Verbrennungsprodukte werden als Heißgasstrom 6 aus der Brennkammer 4 abgeleitet und der Entspannungsturbine 5 zur mechanischen Arbeitsleistung zugeführt.

Die dargestellte Gasturbine 100 weist einen nicht weiter im Detail gezeigten Bypass-Strömungskanal 10 auf, der dazu ausgebildet ist, bei Betrieb der Gasturbine 100 Verdichterluft 2 an dem Brenner 3 vorbei und einem in der Brennkammer 4 erzeugten Heißgasstrom 6 zuzuführen, wobei weiterhin der Öffnungsquerschnitt Q des Bypass-Strömungskanals 10 durch ein Stellmittel 11 eingestellt werden kann. Auch dieses Stellmittel 11 ist vorliegend nicht im Detail gezeigt.

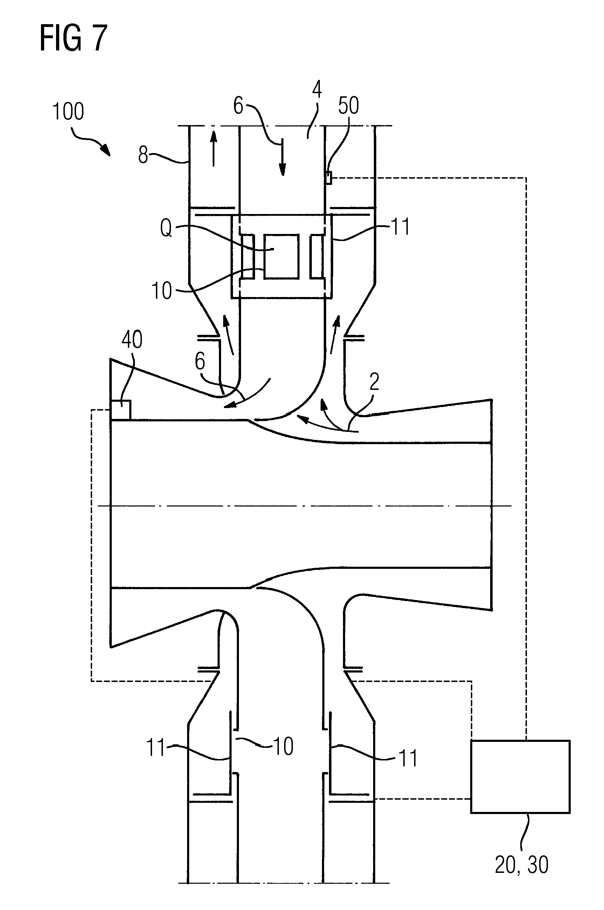

Figur 7 zeigt eine schematische Schnittansicht durch die in Figur 6 gezeigte Ausführungsform der Gasturbine 100, welche sowohl die Bypass-Strömungskanäle 10 als auch die Stellmittel 11 zur Einstellung des Öffnungsquerschnitts Q des Bypass-Strömungskanals 10 darstellt. Bei Betrieb der Gasturbine 100 wird zunächst Verdichterluft 2 aus einem nicht weiter gezeigten Verdichter 1 der Brennkammer 4 zugeführt. Die Verdichterluft 2 wird hierbei in einem Volumen zwischen der Brennkammer 4 und einer Außenwandung 8 zu den Brennern 3 geleitet. Hierbei strömt die Verdichterluft 2 an dem Bypass-Strömungskanal 10 vorbei, welcher einen Öffnungsquerschnitt Q aufweist und den Bereich zwischen Brennkammer 4 und Außenwandung 8 mit der Brennkammer 4 selbst strömungstechnisch verbindet. Der Öffnungsquerschnitt Q ist durch einen als Stellmittel 11 ausgebildeten Schieber einstellbar (genauere Ausführungen zu dieser Technologie können aus der DE 43 39 724 C1 entnommen werden). Der Strom der Verdichterluft 2 wird folglich an dem Öffnungsquerschnitt Q aufgeteilt, wobei ein Teil weiter zu den Brennern 3 der Brennkammer 4 strömt, ein anderer Teil jedoch durch den Öffnungsquerschnitt Q hindurch in die Brennkammer 4 zum Druckausgleich.

Der zu den Brennern 3 geführte Strom an Verdichterluft 2 wird zudem dadurch vermindert, dass ein Teil dieser Verdichterluft 2 durch nicht weiter gezeigte Kühlkanäle 7 in die Brennkammer 4 einströmen kann und hierbei nicht weiter gezeigte Heißgasbauteile, insbesondere die Flammenrohrböden, der Brennkammer 4 kühlt. Die Kühlleistung ist hierbei proportional zur an den Kühlkanälen anliegenden statischen Druckdifferenz.

Weiterhin weist die Gasturbine 100 eine Einstelleinheit 20 auf, die eine Regelschaltung 30 umfasst, die für die geeignete Einstellung des Öffnungsquerschnitts Q des Bypass-Strömungskanals 10 ausgebildet ist. Ebenfalls weist die Gasturbine 100 eine Messsonde 40 auf, welche eine thermische Kenngröße messtechnisch erfasst (bspw. die Turbinenaustrittstemperatur) und die Messwerte an die Einstelleinheit 20 bzw. die Regelschaltung 30 übermittelt. Ebenso weist die Gasturbine 100 eine in der Brennkammer 4 angeordnete zweite Messsonde 50 auf, welche dazu ausgebildet ist, die Materialtemperatur MT der Brennkammer 4 messtechnisch zu erfassen und die Messwerte an die Einstelleinheit 20 bzw. an die Regelschaltung 30 zu übermitteln. Die Einstelleinheit 20 gewährleistet, dass der Öffnungsquerschnitt Q des Bypass-Strömungskanals 10 derart eingestellt wird, dass die Änderungsgeschwindigkeit V des Öffnungsquerschnitts Q derart gewählt ist, dass die Primärzonentemperatur TPZ im Wesentlichen konstant ist, und insbesondere um nicht mehr als 10% variiert, oder dass die Änderungsgeschwindigkeit V des Öffnungsquerschnitts Q derart gewählt ist, dass der relative Brennkammerdruckverlust ΔBDV die Materialtemperatur MT der Brennkammer 4 im Wesentlichen konstant ist, insbesondere, dass der relative Brennkammerdruckverlust ΔBDV die Materialtemperatur MT der Brennkammer 4 nicht mehr als um 10% variiert.

Weitere Ausführungsformen ergeben sich aus den Unteransprüchen.

## Patentansprüche

1. Verfahren zum Betreiben einer Gasturbine (100) in Teillast, welche einen Verdichter (1) zur Bereitstellung von Verdichterluft (2), eine mit einem Brenner (3) versehene Brennkammer (4) und eine Entspannungsturbine (5) aufweist, wobei weiterhin ein Bypass-Strömungskanal (10) vorgesehen ist, der dazu ausgebildet ist, bei Betrieb der Gasturbine (100) Verdichterluft (2) an dem Brenner (3) vorbei und einem in der Brennkammer (4) erzeugten Heißgasstrom (6) zuzuführen, und wobei weiterhin der Öffnungsquerschnitt (Q) des Bypass-Strömungskanals (10) durch ein Stellmittel (11) eingestellt werden kann, welches Verfahren folgende Schritte aufweist:
- Betreiben der Gasturbine (100) in Teillast;
- Einstellung des Öffnungsquerschnitts (Q) des Bypass-Strömungskanals (10) so dass die Änderungsgeschwindigkeit (V) des Öffnungsquerschnitts (Q) derart gewählt ist, dass die Primärzonentemperatur (TPZ) im Wesentlichen konstant ist, und insbesondere nicht mehr als um 10% variiert.

2. Verfahren zum Betreiben einer Gasturbine (100) in Teillast, welche einen Verdichter (1) zur Bereitstellung von Verdichterluft (2), eine mit einem Brenner (3) versehene Brennkammer (4) und eine Entspannungsturbine (5) aufweist, wobei weiterhin ein Bypass-Strömungskanal (10) vorgesehen ist, der dazu ausgebildet ist, bei Betrieb der Gasturbine (100) Verdichterluft (2) an dem Brenner (3) vorbei und einem in der Brennkammer (4) erzeugten Heißgasstrom (6) zuzuführen, und wobei weiterhin der Öffnungsquerschnitt (Q) des Bypass-Strömungskanals (10) durch ein Stellmittel (11) eingestellt werden kann, welches Verfahren folgende Schritte aufweist:
- Betreiben der Gasturbine (100) in Teillast;
- Einstellung des Öffnungsquerschnitts (Q) des Bypass-Strömungskanals (10), so dass die Änderungsgeschwindigkeit (V) des Öffnungsquerschnitts (Q) derart gewählt ist, dass der relative Brennkammerdruckverlust (ΔBDV) oder eine Materialtemperatur (MT) der Brennkammer (4) im Wesentlichen konstant ist, insbesondere dass der relative Brennkammerdruckverlust (ΔBDV) oder die Materialtemperatur (MT) der Brennkammer (4) nicht mehr als um 10% variiert.

3. Verfahren nach Anspruch 1 und 2,
**dadurch gekennzeichnet, dass** während eines ersten Zeitabschnitts (ZA1) das Verfahren nach Anspruch 1 ausgeführt wird, und während eines zweiten Zeitabschnitts (ZA2) das Verfahren nach Anspruch 2, wobei insbesondere der zweite Zeitabschnitt (ZA2) unmittelbar an den ersten Zeitabschnitt (ZA1) anschließt.

4. Verfahren nach Anspruch 1 und 2 oder 3,
**dadurch gekennzeichnet, dass** das Verfahren nach Anspruch 1 während eines ersten Zeitabschnitts (ZA1) solange ausgeführt wird, bis eine erste thermische Kenngröße (TK1) einen vorbestimmten ersten Grenzwert (GW1) erreicht, wobei dann insbesondere der zweite Zeitabschnitt (ZA2) anschließt, während dessen ein Verfahren nach Anspruch 2 ausgeführt wird.

5. Verfahren nach einem der vorhergehenden Ansprüche 2 bis 4,
**dadurch gekennzeichnet, dass** das Verfahren nach Anspruch 2 solange bei einer Teillastverminderung ausgeführt wird, bis eine zweite thermische Kenngröße (TK2) einen vorbestimmten zweiten Grenzwert (GW2) erreicht, wobei dann insbesondere die Änderung des Öffnungsquerschnitts (Q) derart gewählt wird, dass der Öffnungsquerschnitts (Q) verringert wird, insbesondere schrittweise verringert wird.

6. Verfahren nach Anspruch 5,
**dadurch gekennzeichnet, dass** bei Verringerung des Öffnungsquerschnitts (Q) und bei Erreichen eines dritten vorbestimmten Grenzwertes (GW3) durch die zweite thermische Kenngröße (TK2) die Änderung des Öffnungsquerschnitts (Q) derart gewählt wird, dass der Öffnungsquerschnitt (Q) wieder vergrößert wird, insbesondere wieder schrittweise vergrößert wird.

7. Verfahren nach einem der vorhergehenden Ansprüche,
**dadurch gekennzeichnet, dass** das Verfahren unterhalb des Leitschaufelverstellbereichs (LSVB) ausgeführt wird.

8. Gasturbine (100) geeignet zum Ausführen eines Verfahrens nach einem der vorhergehenden Ansprüche, welche einen Verdichter (1) zur Bereitstellung von Verdichterluft (2), eine mit einem Brenner (3) versehene Brennkammer (4) und eine Entspannungsturbine (5) aufweist, wobei weiterhin ein Bypass-Strömungskanal (10) vorgesehen ist, der dazu ausgebildet ist, bei Betrieb der Gasturbine (100) Verdichterluft (2) an dem Brenner (3) vorbei und einem in der Brennkammer (4) erzeugten Heißgasstrom (6) zuzuführen, und wobei weiterhin der Öffnungsquerschnitt (Q) des Bypass-Strömungskanals (10) durch ein Stellmittel (11) eingestellt werden kann,
**dadurch gekennzeichnet, dass** weiterhin eine Einstelleinheit (20) umfasst ist, welche dazu ausgebildet ist, den Öffnungsquerschnitt (Q) des Bypass-Strömungskanals (10) derart einzustellen, dass die Änderungsgeschwindigkeit (V) des Öffnungsquerschnitts (Q) derart gewählt ist, dass die Primärzonentemperatur (TPZ) im Wesentlichen konstant ist, und insbesondere nicht mehr als um 10% variiert, oder dass die Änderungsgeschwindigkeit des Öffnungsquerschnitts (Q) derart gewählt ist, dass der relative Brennkammerdruckverlust (ΔBDV) oder eine Materialtemperatur (MT) der Brennkammer (4) im Wesentlichen konstant ist, insbesondere dass der relative Brennkammerdruckverlust (ΔBDV) oder die Materialtemperatur (MT) der Brennkammer (4) nicht mehr als um 10% variiert.

9. Gasturbine nach Anspruch 8,
**dadurch gekennzeichnet, dass** weiterhin eine Regelschaltung (30) und eine Messsonde (40) umfasst sind, wobei die Messsonde (40) zur Erfassung einer thermischen Kenngröße (TK2) ausgebildet ist, und die Regelschaltung (30) dazu ausgebildet ist, bei einer Teillastverminderung bei Erreichen eines vorbestimmten Grenzwerts (GW2) der thermischen Kenngröße (TK2) die Änderung des Öffnungsquerschnitts (Q) derart gewählt wird, dass der Öffnungsquerschnitt (Q) wieder verringert wird, insbesondere schrittweise verringert wird.

10. Gasturbine nach einem der Ansprüche 8 oder 9;
**dadurch gekennzeichnet, dass** die Gasturbine (100) derart ausgebildet ist, dass die dem Brenner (3) zugeleitete Verdichterluft (2) wenigstens zum Teil zum Kühlen von Heißgasteilen der Brennkammer (4), insbesondere von Flammrohrböden, mittels Leitung durch Kühlkanäle (7) in der Brennkammer (4) vorgesehen ist.
